# EUROPÄISCHE PATENTSCHRIFT

(11) **EP 3 441 662 B1**
(45) Veröffentlichungstag und Bekanntmachung des Hinweises auf die Patenterteilung: **07.07.2021**
(21) Anmeldenummer: 18186264.0
(22) Anmeldetag: 30.07.2018
(51) Int. Cl.: F16L 41/08, E03F 3/04, F16B 5/06, F16B 5/07

(54) **ANSCHLUSSSTUTZEN**
CONNECTION PIPE
TUBULURE DE RACCORDEMENT

(30) Priorität: 07.08.2017 DE 202017104708 U
(43) Veröffentlichungstag der Anmeldung: 13.02.2019
(73) Patentinhaber: REHAU AG + Co, 95111 Rehau (DE)
(72) Erfinder: Schneider, Christoph, 91074 Herzogenaurach (DE); Sieber, Jürgen, 91074 Herzogenaurach (DE); Hendel, Roland, 91086 Aurachtal (DE); Lipphardt, Tobias, 90762 Fürth (DE); Ciolak, Mariusz, 91052 Erlangen (DE)

(56) Entgegenhaltungen:
- DE-U1-202008 005 803
- DE-U1-202015 106 969
- US-A- 3 803 670

## Beschreibung

Die Erfindung betrifft einen Anschlussstutzen zum Einsetzen in einen Elastomereinsatz für die Bildung einer Anschlussvorrichtung.

Des Weiteren betrifft die Erfindung eine Anschlussvorrichtung, die einen Elastomereinsatz und einen solchen Anschlussstutzen umfasst.

Schließlich betrifft die Erfindung ein Fluidleit-, -aufnahme- und -speichersystem mit einer solchen Anschlussvorrichtung.

Eine gattungsgemäße Anschlussvorrichtung, die einen Elastomereinsatz und einen Anschlussstutzen umfasst ist aus der DE 20 2006 005 685 U1 oder der DE 20 2015 106969 U1 bekannt.

Eine solche Anschlussvorrichtung ist geeignet, eine Nebenrohrleitung fluiddicht an eine Hauptleitung, einen Schacht oder eine Queröffnung in einer Wand anzuschließen.

Derartige Anschlussvorrichtungen müssen sicher installierbar und dauerhaft sein und eine hohe Fluiddichtheit aufweisen.

Zur Herstellung der Anschlussvorrichtung wird zunächst der Elastomereinsatz in die Queröffnung einer Hauptleitung, eines Schachtes oder einer Wand eingesetzt, und anschließend der Anschlussstutzen in den Elastomereinsatz eingeschraubt, um die Außenfläche des Elastomereinsatzes möglichst großflächig an die Laibung der Queröffnung anzupressen. Zum Einschrauben ist an der Innenseite des hohlstopfenförmig ausgebildeten Elastomereinsatzes ein Innengewinde ausgebildet, entsprechend an der Außenseite des Anschlussstutzens ein Außengewinde. Zum Einschrauben des Anschlussstutzens in den Elastomereinsatz zur Bildung der Anschlussvorrichtung wird im Allgemeinen ein Drehwerkzeug benutzt, welches mit Fortsätzen am Anschlussstutzen interagiert und so ein Eingreifen und Drehen des Anschlussstutzens ermöglicht.

Es hat sich herausgestellt, dass diese Lösung verschiedene Nachteile mit sich bringt, so kann das Drehwerkzeug vom Anschlussstutzen abrutschen, sodass zum einen der Anschlussstutzen oder die Fortsätze am Anschlussstutzen beschädigt werden können, zum anderen kann es auch zu einer Verletzung der Person kommen, die die Anschlussvorrichtung installiert.

Weiterhin ist nach dem Abrutschen eine Neupositionierung des Drehwerkzeugs am Anschlussstutzen notwendig, um diesen dann weiter einzudrehen, was mit einem Zeitverlust bei der Installation der Anschlussvorrichtung einhergeht.

Hier setzt die Erfindung ein, der die Aufgabe zugrunde liegt, einen verbesserten Anschlussstutzen bereitzustellen, der die vorstehend genannten Nachteile der Technik überwindet. Eine weitere Aufgabe der Erfindung ist es, eine Anschlussvorrichtung mit einem solchen verbesserten Anschlussstutzen anzugeben.

Schließlich ist es noch Aufgabe der vorliegenden Erfindung, ein Fluidleit-, -aufnahme- und -speichersystem bereitzustellen, welches eine solche Anschlussvorrichtung umfasst.

Die erste gestellte Aufgabe wird durch den Anschlussstutzen gemäß Anspruch 1 gelöst.

Durch das Vorsehen gemäß vorliegender Erfindung, dass am Antriebsende des Anschlussstutzens wenigstens ein Federfortsatz ausgebildet ist, der geeignet ist, ein Drehwerkzeug zur Drehung des Anschlussstutzens unter Federkraft festzulegen, werden die vorstehend genannten Nachteile des Standes der Technik überwunden.

Durch diese Maßnahme gemäß vorliegender Erfindung ist ein gegenüber dem Stand der Technik verbesserter Anschlussstutzen bereitgestellt, der es ermöglicht, dass das Drehwerkzeug, das zum Drehen des Anschlussstutzens in den Elastomereinsatz zur Bildung der Anschlussvorrichtung notwendig ist, sicher festgelegt ist, somit nicht abrutschen kann und damit die Gefahr einer Beschädigung des Anschlussstutzens bzw. die Gefahr einer Verletzung des installierenden Personals ausgeschlossen bzw. erheblich minimiert ist.

Im Rahmen der vorliegenden Erfindung kann es sich als äußerst vorteilhaft erweisen, wenn vorgesehen ist, dass der wenigstens eine Federfortsatz einteilig mit dem Anschlussstutzen ausgebildet ist.
Durch das einteilige Ausbilden des wenigstens einen Federfortsatzes des Anschlussstutzens mit dem Anschlussstutzen wird zum einen eine vereinfachte Fertigung eines solchen erfindungsgemäßen Anschlussstutzens möglich, da der Federfortsatz in einem Werkzeug, beispielsweise einem Spritzgusswerkzeug, zusammen mit dem Anschlussstutzen in einem Formprozess ausbildbar ist.
Weiterhin ist damit ein sehr dauerhafter und stabiler Federfortsatz geschaffen, der kaum dazu neigt, dass er beispielsweise durch Überbelastung abknickt oder abbricht.

Bei der vorliegenden Erfindung kann sich als sehr hilfreich erweisen, wenn vorgesehen ist, dass zwei oder vier Federfortsätze ausgebildet sind.
Hierzu können am Anschlussstutzen, der ein Antriebsende aufweist, an dem Fortsätze angeordnet sind, neben diesen Fortsätzen zwei oder vier Federfortsätze ausgebildet sein. Dadurch ist es besonders einfach, das Drehwerkzeug, das zum Drehen des Anschlussstutzens in den Elastomereinsatz zur Bildung der Anschlussvorrichtung notwendig ist, in besonders sicherer Weise festzulegen.

In besonders günstiger Weise kann vorgesehen sein, dass zwei Federfortsätze ausgebildet sind, die sich diametral gegenüberstehen.
Bei der Ausbildung von zwei Federfortsätzen am Anschlussstutzen, die sich diametral gegenüberstehen, kann das Drehwerkzeug zum Drehen des Anschlussstutzens besonders einfach unter Federkraft festgelegt werden.

Ein Federelement in Form eines Bügelfederelements oder in Form eines Bogenfederelements eignet sich in besonders günstiger Weise dafür, dass Drehwerkzeug zum Drehen des Anschlussstutzens unter Federkraft festzulegen. Damit ist ein Abrutschen des Drehwerk-zeugs beim Betätigen wirksam verhindert.

Der Anschlussstutzen der vorliegenden Erfindung kann mit großem Vorteil derartig ausgeführt sein, dass dieser aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

Derartige Polymermaterialien sind langlebig, inert, stabil, weisen ein geringes Gewicht auf, sind einfach handhabbar, leicht installierbar und können kostengünstig bereitgestellt werden. Insbesondere ist es auf diese Weise sehr einfach, aus dem Polymermaterial den Anschlussstutzen zu bilden.

Mit Vorteil kann ein solcher erfindungsgemäßer Anschlussstutzen mit Hilfe eines Polymerformgebungsverfahrens hergestellt sein.

Insbesondere durch ein Spritzgussverfahren und / oder ein Blasverfahren und / oder ein Thermoformverfahren kann ein derartiger Anschlussstutzen leicht fertigbar sein.

Alternativ kann vorgesehen sein, dass der Anschlussstutzen unter Verwendung eines generativen Fertigungsverfahrens, beispielsweise durch ein 3-D-Druckverfahren, hergestellt ist. Hierzu kann mit Vorteil ein datenverarbeitungsmaschinenlesbares dreidimensionales Modell für die Herstellung genutzt werden.

Ein Verfahren zur Erzeugung eines datenverarbeitungsmaschinenlesbaren dreidimensionalen Modells zur Verwendung in einem Herstellungsverfahren für einen Anschlussstutzen ist auch anwendbar. Hierbei umfasst das Verfahren insbesondere auch die Eingabe von Daten, die einen Anschlussstutzen darstellen, in eine Datenverarbeitungsmaschine und die Nutzung der Daten, um einen Anschlussstutzen als dreidimensionales Modell darzustellen, wobei das dreidimensionale Modell geeignet ist zur Nutzung bei der Herstellung eines Anschlussstutzens. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Anschlussstutzen abgegeben wird und die reflektierte Energie empfangen wird, und wobei ein virtuelles dreidimensionales Modell eines Anschlussstutzens unter Verwendung einer computerunterstützten Design-Software erzeugt wird.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Die Lösung der Aufgabe der Erfindung, eine Anschlussvorrichtung bereitzustellen, erfolgt gemäß Anspruch 6.

Es wurde im Rahmen der vorliegenden Erfindung erkannt, dass eine Anschlussvorrichtung für eine Nebenrohrleitung in Kombination mit einer Queröffnung in einer Hauptrohrleitung, in einem Schacht oder in einer Wand, dann besonders aufgewertet ist, wenn vorgesehen ist, dass diese einen hohlstopfenförmigen Elastomereinsatz und einen Anschlussstutzen, wie vorstehend beschrieben, umfasst.

Die letzte Aufgabe der vorliegenden Erfindung, ein Fluidleit-, -aufnahme und -speichersystem anzugeben, erfährt ihre Lösung in Anspruch 7.

Das erfindungsgemäße Fluidleit-, -aufnahme und -speichersystem umfasst eine Nebenrohrleitung, eine Hauptrohrleitung und / oder einen Schacht und / oder eine Wand, und eine Anschlussvorrichtung für eine Nebenrohrleitung in Kombination mit einer Queröffnung in einer Hauptrohrleitung, in einem Schacht oder in einer Wand, gemäß vorstehender Beschreibung.

Anwendung findet die vorliegende Erfindung insbesondere im Bereich der Kanal- und Abwassertechnik.
Neben der geschilderten Anwendung gibt es weitere Anwendungsfelder in der Regenwasserbewirtschaftung, bei Hausanschlüssen, in Kläranlagen, in der Schwimmbadtechnik, in der Industrie, in der Landwirtschaft und in weiteren Bereichen.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert.

Die Erfindung wird anhand der beigefügten Figuren näher erläutert.

Hierzu zeigt:
Fig. 1: eine schematische Seitenansicht eines Anschlussstutzens;
Fig. 2: eine schematische Seitenansicht eines Federfortsatzes in einer ersten Ausführungsform;
Fig. 3: eine schematische Seitenansicht eines Federfortsatzes in einer zweiten Ausführungsform;
Fig. 4: eine schematische Aufsicht auf einen Anschlussstutzen;
Fig. 5: eine schematische Aufsicht auf ein Drehwerkzeug;
Fig. 6: eine schematische Aufsicht auf ein Drehwerkzeug, das auf einen Anschlussstutzen aufgesetzt ist;
Fig. 7: eine schematische Seitenansicht eines Federfortsatzes, auf den ein Drehwerkzeug aufgesetzt ist, in einem ersten Zustand;
Fig. 8: eine schematische Seitenansicht eines Federfortsatzes, auf den ein Drehwerkzeug aufgesetzt ist, in einem zweiten Zustand;
Fig. 9: eine schematische Seitenansicht eines Federfortsatzes, auf den ein Drehwerkzeug aufgesetzt ist, in einem dritten Zustand.

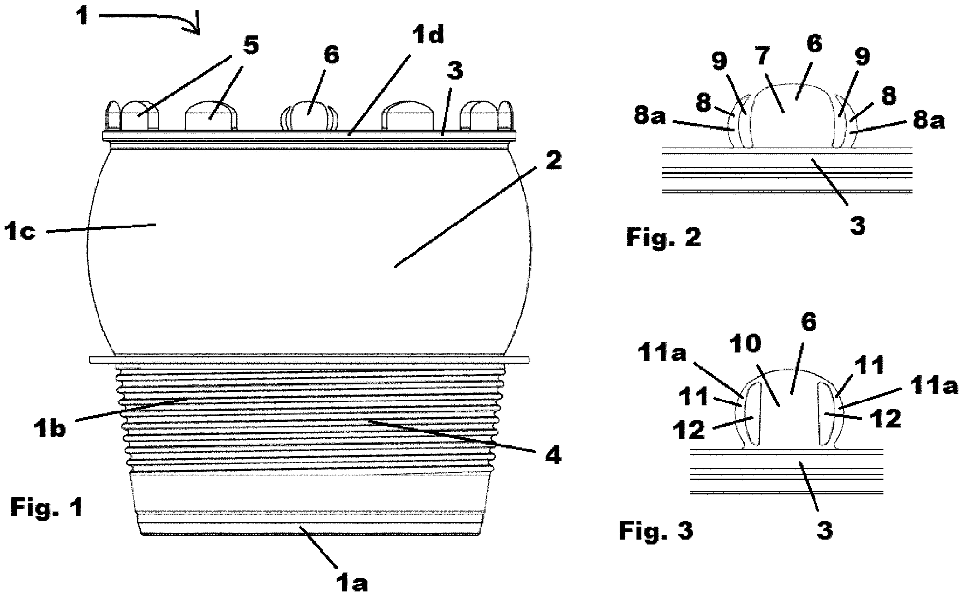

In der Fig. 1 ist eine schematische Seitenansicht eines Anschlussstutzens 1 gezeigt. Der Anschlussstutzen 1 weist ein Eingriffsende 1a auf, mit dem voran er in den hier nicht gezeigten Elastomereinsatz eingeführt wird.

An das Eingriffsende 1a des Anschlussstutzens 1 schließt sich ein konischer Teil 1b an, an dem ein Außengewinde 4 ausgebildet ist. An dem konischen Teil 1b des Anschlussstutzens 1 schließt sich ein Aufnahmeabschnitt 1c an, der als Einsteckabschnitt 2 genutzt wird, um ein hier nicht gezeigtes Nebenrohr in den Anschlussstutzen 1 fluiddicht einzustecken.

An den Aufnahmeabschnitt 1c des Anschlussstutzens 1 schließt sich ein Antriebsende 1d an, welches einen Endrand 3 aufweist, an dem Fortsätze 5 und wenigstens ein Federfortsatz 6 ausgebildet sind. Die Fortsätze 5 und der mindestens eine Federfortsatz 6 sind an ihren Kanten verrundet, sodass durch diese Maßnahme ein einfacheres Aufsetzen des Drehwerk-zeugs 13 ermöglicht ist.

In der Fig. 2 ist in einer schematischen Seitenansicht ein Federfortsatz 6 in einer ersten Ausführungsform gezeigt.

Die Bezugszeichen in Fig. 2 entsprechen denen aus der Figur 1.

Der Federfortsatz 6 am Endrand 3 des Anschlussstutzens 1 weist einen Zentralabschnitt 7 auf, der vom Endrand 3 des Anschlussstutzens 1 etwa senkrecht nach oben hervorsteht. Der Zentralabschnitt 7 des Federfortsatzes 6 wird randseitig von zwei gegenüberliegenden Federelementen 8, die als Bügelfederelemente 8a ausgebildet sind, flankiert.

Zwischen dem Bügelfederelement 8a und dem Zentralabschnitt 7 des Federfortsatzes 6 ist jeweils ein Freiraum 9 ausgebildet.

In der Fig. 3 ist in einer schematischen Seitenansicht ein Federfortsatz 6 in einer zweiten Ausführungsform dargestellt.

Die Bezugszeichen in Fig. 3 entsprechen denen aus den vorangehenden Figuren.

Der Federfortsatz 6 am Endrand 3 des Anschlussstutzens 1 steht vom Endrand 3 etwa senkrecht nach oben weg. Der Federfortsatz 6 in der zweiten Ausführungsform weist einen Mittenabschnitt 10 auf, der randseitig gegenüberliegend jeweils einen Freiraum 9 in Form eines Durchbruchs aufweist, sodass zwei Federelemente 11 in Form von Bogenfederelementen 11a ausgebildet sind.

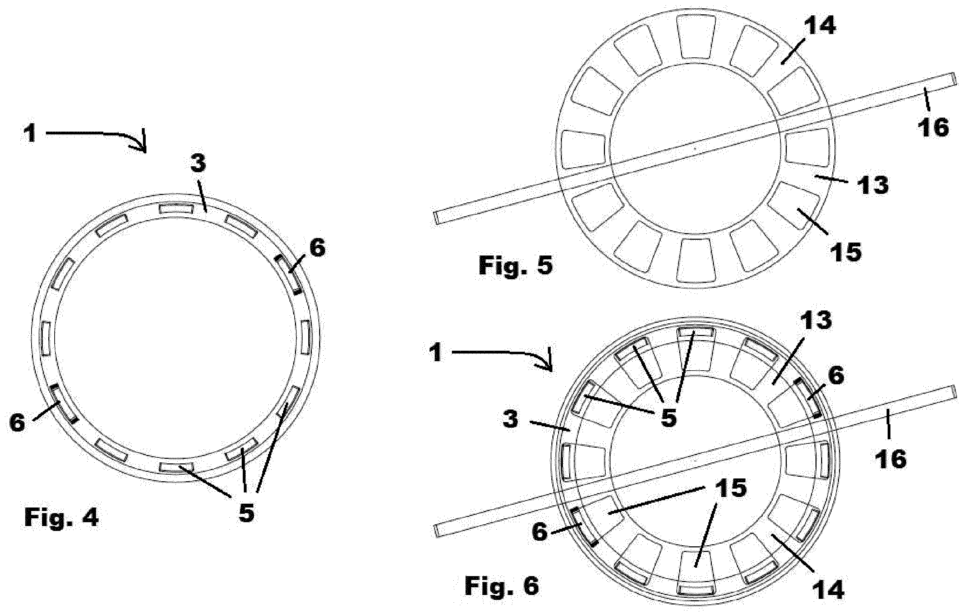

In der Fig. 4 ist eine schematische Aufsicht auf einen Anschlussstutzen 1 gezeigt.

Die Bezugszeichen in Fig. 4 entsprechen denen aus den vorangehenden Figuren.

Am Endrand 3 des Anschlussstutzens 1 sind Fortsätze 5 und Federfortsätze 6 ausgebildet. In der dargestellten Ausführungsform gemäß Fig. 4 sind zehn Fortsätze 5 und zwei Federforts-ätze 6 am Endrand 3 des Anschlussstutzens 1 ausgebildet. Die beiden Federfortsätze 6 sind derartig angeordnet, dass diese sich diametral gegenüberliegen.

Jeder Fortsatz 5 bzw. jeder Federfortsatz 6 hat zu seinem unmittelbaren Nachbarn jeweils den gleichen Abstand, sodass alle Fortsätze 5 und Federfortsätze 6 in gleichmäßiger Verteilung am Endrand 3 des Anschlussstutzens 1 angeordnet sind.

In der Fig. 5 ist eine schematische Aufsicht auf ein Drehwerkzeug 13 gezeigt.

Das Drehwerkzeug 13 umfasst einen Aufnahmeabschnitt 14, der beispielsweise in Form eines flachen Bleches aus Metall ausgebildet ist.

Am Aufnahmeabschnitt 14 sind Durchbrüche 15 angeordnet. Die Durchbrüche 15 am Aufnahmeabschnitt 14 des Drehwerkzeugs 13 korrespondieren in ihrer Anzahl und Größe mit den Fortsätzen 5 bzw. Federfortsätzen 6 am Anschlussstutzen 1. Vorliegend sind in Fig. 5 am Drehwerkzeug 13 zwölf Durchbrüche 15 ausgebildet. Die Durchbrüche 15 weisen eine etwa trapezförmige Gestalt auf und gestatten so verschiedene Durchmesser von Anschlussstutzen 1 anzutreiben.

Das Drehwerkzeug 13 weist einen Handgriff 16 auf, mit dem das Drehwerkzeug 13 antreibbar ist.

In der Fig. 6 ist in einer Aufsicht gezeigt, wie das Drehwerkzeug 13 auf den Anschlussstutzen 1 aufgesetzt ist.

Die Bezugszeichen in Fig. 6 entsprechen denen aus den vorangehenden Figuren.

Beim Aufsetzen des Drehwerkzeugs 13 auf den Anschlussstutzen 1 greifen die Durchbrüche 15 des Drehwerkzeugs 13, die am Aufnahmeabschnitt 14 ausgebildet sind, die Fortsätze 5 bzw. Federfortsätze 6 am Endrand 3 des Anschlussstutzens 1, indem die Fortsätze 5 bzw. Federfortsätze 6 die Durchbrüche 15 ein Stück weit durchdringen.

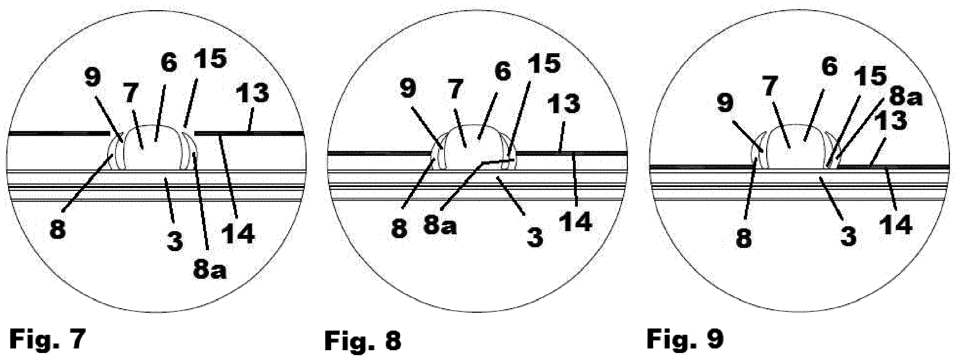

In der Fig. 7 ist eine schematische Seitenansicht eines Federfortsatzes 6, auf den ein Drehwerkzeug 13 aufgesetzt ist in einem ersten Zustand dargestellt.

Die Bezugszeichen in Fig. 7 entsprechen denen aus den vorangehenden Figuren.

Das Drehwerkzeug 13 ist mit seinem Durchbruch 15, der am Aufnahmeabschnitt 14 ausgebildet ist derartig positioniert, dass der Federfortsatz 6 mit dem Durchbruch 15 des Drehwerkzeugs 13 fluchtet.

In der Fig. 8 ist eine schematische Seitenansicht eines Federfortsatzes 6, auf den ein Drehwerkzeug 13 aufgesetzt ist in einem zweiten Zustand gezeigt.

Die Bezugszeichen in Fig. 8 entsprechen denen aus den vorangehenden Figuren.

Das Drehwerkzeug 13 ist im zweiten Zustand in Richtung des Endrandes 3 des Anschlussstutzens 1 bewegt worden, sodass der Rand des Aufnahmeabschnitts 14 am Durchbruch 15 des Drehwerkzeugs 13 mit dem Federelement 8, das in Form eines Bügelfederelements 8a ausgebildet ist, in Kontakt kommt.

Da der Durchbruch 15 etwas kleiner ist als die maximale Breitenausdehnung des Federfortsatzes 6 werden die Federelemente 8, die als Bügelfederelemente 8a ausgebildet sind, durch den Rand des Aufnahmeabschnitts 14 am Durchbruch 15 des Drehwerkzeugs 13 ein geringes Stück in Richtung des Zentralabschnitts 7 gebogen, wobei der Freiraum 9 zwischen dem Zentralabschnitt 7 des Federfortsatzes 6 und dem Federelement 8 verringert wird.

In Fig. 9 ist schließlich eine schematische Seitenansicht eines Federfortsatzes 6, auf den ein Drehwerkzeug 13 aufgesetzt ist, in einem dritten Zustand gezeigt.

Die Bezugszeichen in Fig. 9 entsprechen denen aus den vorangehenden Figuren.

Im dritten Zustand ist nun das Drehwerkzeug 13 durch den Federfortsatz 6 unter Federkraft festgelegt, in dem der Aufnahmeabschnitt 14 des Drehwerkzeugs 13 ganz bis zum Endrand 3 des Anschlussstutzens 1 bewegt worden ist.

Hierbei sind die Federelemente 8, die als Bügelfederelemente 8a am Federfortsatz 6 ausgebildet sind, in ihre ursprüngliche Lage zurückgefedert, wobei sich der Freiraum 9 zwischen dem Zentralabschnitt 7 des Federfortsatzes 6 und dem Federelement 8 sich gegenüber dem zweiten Zustand wieder vergrößert und seine ursprüngliche Form gemäß dem ersten Zustand wieder eingenommen hat.

Durch die Federelemente 8 in Form von Bügelfederelementen 8a ist der Aufnahmeabschnitt 14 des Drehwerkzeugs 13 unter Federkraft am Endrand 3 des Anschlussstutzens 1 festgelegt, sodass der Anschlussstutzen 1 in sicherer Weise in den hier nicht gezeigten Elastomereinsatz mithilfe des Drehwerkzeugs 13 eindrehbar ist.

Zur Abnahme des Drehwerkzeugs 13 vom Anschlussstutzen 1 sind die drei Zustände in umgekehrter Reihenfolge wieder zu durchlaufen.

### Bezugszeichenliste

- 1: Anschlussstutzen
- 1a: Eingriffsende
- 1b: konischer Teil
- 1c: Aufnahmeabschnitt
- 1d: Antriebsende
- 2: Einsteckabschnitt
- 3: Endrand
- 4: Außengewinde
- 5: Fortsatz
- 6: Federfortsatz
- 7: Zentralabschnitt
- 8: Federelement
- 8a: Bügelfederelement
- 9: Freiraum
- 10: Mittenabschnitt
- 11: Federelement
- 11a: Bogenfederelement
- 12: Freiraum
- 13: Drehwerkzeug
- 14: Aufnahmeabschnitt
- 15: Durchbruch
- 16: Handgriff
- 19: Anschlussvorrichtung
- 20: Fluidleit-, -aufnahme- und -speichersystem

## Patentansprüche

1. Anschlussstutzen (1) zum Einsetzen in einen Elastomereinsatz zur Bildung einer Anschlussvorrichtung (19) für eine Nebenrohrleitung in Kombination mit einer Queröffnung in einer Hauptrohrleitung, in einem Schacht oder in einer Wand, wobei die Außenseite des Elastomereinsatzes an die Queröffnung angepasst ist und die Innenseite des Elastomereinsatzes einen konischen Schraubbereich aufweist, und wobei der Anschlussstutzen (1) ein Eingriffsende (1a), einen konischen Mittelteil (1b) mit Außengewinde (4), einen Aufnahmeabschnitt (1c) und ein Antriebsende (1d) mit Fortsätzen (5) und einen Endrand (3) aufweist, **dadurch gekennzeichnet, dass** wenigstens ein Federfortsatz (6) am Antriebsende (1d) ausgebildet ist, wobei am Federfortsatz (6) wenigstens ein Federelement (8, 11) ausgebildet ist, welche als Bügelfederelement (8a) oder als Bogenfederelement (11a) geformt sind, wobei entweder zwei einander gegenüberliegende Bügelfederelemente (8a) einen Zentralabschnitt (7) des Federfortsatzes (6) randseitig flankieren, oder dass zwei Bogenfederelemente (11a) an einem Federfortsatz (6) derart ausgebildet sind, dass der Federfortsatz (6) einen Mittenabschnitt (10) aufweist, der randseitig gegenüberliegend jeweils einen Freiraum (9) in Form eines Durchbruchs aufweist, wobei der Zentralabschnitt (7) vom Endrand (3) des Anschlussstutzen (1) etwa senkrecht nach oben hervorsteht.

2. Anschlussstutzen (1) nach Anspruch 1, **dadurch gekennzeichnet, dass** der wenigstens eine Federfortsatz (6) einteilig mit dem Anschlussstutzen (1) ausgebildet ist.

3. Anschlussstutzen (1) nach Anspruch 1 oder 2, **dadurch gekennzeichnet, dass** zwei oder vier Federfortsätze (6) ausgebildet sind.

4. Anschlussstutzen (1) nach Anspruch 3, **dadurch gekennzeichnet, dass** zwei Federfortsätze (6) ausgebildet sind, die sich diametral gegenüberstehen.

5. Anschlussstutzen (1) nach einem der vorangehenden Ansprüchen, **dadurch gekennzeichnet, dass** dieser aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

6. Anschlussvorrichtung für eine Nebenrohrleitung in Kombination mit einer Queröffnung in einer Hauptrohrleitung, in einem Schacht oder in einer Wand, mit einem hohlstopfenförmigen Elastomereinsatz und einem Anschlussstutzen (1) nach einem der Ansprüche 1 bis 5.

7. Fluidleit-, -aufnahme- und -speichersystem umfassend eine Nebenrohrleitung, eine Hauptrohrleitung und / oder einen Schacht und / oder eine Wand, und eine Anschlussvorrichtung nach Anspruch 6 für eine Nebenrohrleitung in Kombination mit einer Queröffnung in einer Haupt-rohrleitung, in einem Schacht oder in einer Wand.

## Claims

1. A connecting branch (1) for inserting into an elastomer insert for forming a connection device (19) for secondary piping in combination with a transverse opening in main piping, in a shaft or in a wall, wherein the outside of the elastomer insert is adapted to the transverse opening and the inside of the elastomer insert has a conical screwing region, and wherein the connecting branch (1) has an engagement end (1a), a conical middle part (1b) with an external thread (4), a receiving portion (1c) and a drive end (1d) with extensions (5) and an end edge (3), **characterised in that** at least one spring extension (6) is formed on the drive end (1d), with at least one spring element (8, 11) being formed on the spring extension (6), which elements are formed as a bow-type spring element (8a) or as an arcuate spring element (11a), with either two opposing bow-type spring elements (8a) flanking a central portion (7) of the spring extension (6) on the edge, or that two arcuate spring elements (11a) are formed on a spring extension (6) such that the spring extension (6) has a middle portion (10) which in each case has, located opposite each other on the edge, a free space (9) in the form of an aperture, the central portion (7) protruding upwards approximately perpendicularly from the end edge (3) of the connecting branch (1).

2. A connecting branch (1) according to claim 1, **characterised in that** the at least one spring extension (6) is formed in one part with the connecting branch (1).

3. A connecting branch (1) according to claim 1 or 2, **characterised in that** two or four spring extensions (6) are formed.

4. A connecting branch (1) according to claim 3, **characterised in that** two spring extensions (6) which are located diametrically opposite each other are formed.

5. A connecting branch (1) according to one of the preceding claims, **characterised in that** it consists of a polymer material or contains a polymer material, the polymer material preferably being a thermoplastic material, and particularly preferably a polyolefin, such as for example a polypropylene or a polyethylene or a polybutylene, or a copolymer of the aforementioned substances, or a cross-linked polyolefin, in particular a cross-linked polyethylene, or a polyvinyl chloride, or a polyurethane.

6. A connection device for secondary piping in combination with a transverse opening in main piping, in a shaft or in a wall, with an elastomer insert in the form of a hollow plug and a connecting branch (1) according to one of claims 1 to 5.

7. A fluid-conducting, receiving and storage system comprising secondary piping, main piping and/or a shaft and/or a wall, and a connection device according to claim 6 for secondary piping in combination with a transverse opening in main piping, in a shaft or in a wall.

## Revendications

1. Tubulure de raccordement (1) destinée à être insérée dans un insert en élastomère pour former un dispositif de raccordement (19) pour une conduite tubulaire secondaire en combinaison avec une ouverture transversale dans une conduite tubulaire principale, dans un puits ou dans une paroi, dans laquelle le côté extérieur de l'insert en élastomère est adapté à l'ouverture transversale et le côté intérieur de l'insert en élastomère présente une zone de vissage conique, et dans laquelle la tubulure de raccordement (1) présente une extrémité de prise (1a), une partie centrale conique (1b) avec un filetage extérieur (4), une section de logement (1c) et une extrémité d'entraînement (1d) avec des prolongements (5) et un bord d'extrémité (3), **caractérisée** ce qu'au moins un prolongement de ressort (6) est réalisé sur l'extrémité d'entraînement (1d), dans laquelle est réalisé sur le prolongement de ressort (6) au moins un élément de ressort (8, 11), lesquels sont façonnés en tant qu'élément de ressort en étrier (8a) ou en tant qu'élément de ressort en arc (11a), dans laquelle soit une section centrale (7) du prolongement de ressort (6) est flanquée côté bord par deux éléments de ressort en étrier (8a) se faisant face, soit deux éléments de ressort en arc (11a) sont réalisés sur un prolongement de ressort (6) de telle manière que le prolongement de ressort (6) présente une section centrale (10), qui présente côté bord en vis-à-vis respectivement un espace libre (9) sous la forme d'un ajour, dans laquelle la section centrale (7) fait saillie depuis le bord d'extrémité (3) de la tubulure de raccordement (1) à peu près de manière perpendiculaire vers le haut.

2. Tubulure de raccordement (1) selon la revendication 1, **caractérisée en ce que** l'au moins un prolongement de ressort (6) est réalisé en une partie avec la tubulure de raccordement (1).

3. Tubulure de raccordement (1) selon la revendication 1 ou 2, **caractérisée en ce que** deux ou quatre prolongements de ressort (6) sont réalisés.

4. Tubulure de raccordement (1) selon la revendication 3, **caractérisée en ce que** sont réalisés deux prolongements de ressort (6), qui sont diamétralement opposés.

5. Tubulure de raccordement (1) selon l'une quelconque des revendications précédentes, **caractérisée en ce que** celle-ci est constituée d'un matériau polymère ou contient un matériau polymère, dans laquelle le matériau polymère est de manière préférée une matière thermoplastique, et de manière particulièrement préférée une polyoléfine, par exemple un polypropylène ou un polyéthylène ou un polybutylène, ou un copolymère des éléments susmentionnés, ou une polyoléfine réticulée, en particulier un polyéthylène réticulé, ou un polychlorure de vinyle, ou un polyuréthane.

6. Dispositif de raccordement pour une conduite tubulaire secondaire en combinaison avec une ouverture transversale dans une conduite tubulaire principale, dans un puits ou dans une paroi, avec un insert en élastomère en forme de bouchon creux et une tubulure de raccordement (1) selon l'une quelconque des revendications 1 à 5.

7. Système d'acheminement, de logement et de stockage de fluide comprenant une conduite tubulaire secondaire, une conduite tubulaire principale et/ou un puits et/ou une paroi, et un dispositif de raccordement selon la revendication 6 pour une conduite tubulaire secondaire en combinaison avec une ouverture transversale dans une conduite tubulaire principale, dans un puits ou dans une paroi.
